Europäisches Patentamt

European Patent Office

Office européen des brevets

(19)

(11) Numéro de publication: **0 090 775 B1**

(12) **FASCICULE DE BREVET EUROPEEN**

(45) Date de publication du fascicule du brevet:
25.09.85

(51) Int. Cl.⁴: **A 23 L 1/30**, A 23 C 19/09

(21) Numéro de dépôt: 83810121.0

(22) Date de dépôt: **24.03.83**

(54) Composition alimentaire pour confectionner des barres casse-croûte salées de bonne conservation.

(30) Priorité: **29.03.82 CH 1906/82**

(43) Date de publication de la demande:
05.10.83 Bulletin 83/40

(45) Mention de la délivrance du brevet:
25.09.85 Bulletin 85/39

(84) Etats contractants désignés:
**AT BE CH DE FR GB IT LI NL SE**

(56) Documents cités:
**US - A - 3 121 014
US - A - 3 189 464
US - A - 3 729 325
US - A - 3 761 284**

**FOOD TECHNOLOGY, vol. 30, no. 7, juillet 1976, pages 42-44 H. LEUNG et al.: "Development of an intermediate-moisture processed cheese food product"**

(73) Titulaire: **BATTELLE MEMORIAL INSTITUTE, 7 route de Drize, CH-1227 Carouge/Genève (CH)**

(72) Inventeur: **Giddey, Claude, 59, route de Chêne, CH-1208 Geneve (CH)**
Inventeur: **Güney, Sema, 34, rue Gilbert, CH-1217 Meyrin (CH)**

(74) Mandataire: **Dousse, Blasco et al, 7, route de Drize, CH-1227 Carouge/Genève (CH)**

ACTORUM AG

## Description

La présente invention a pour objet une composition d'ingrédients alimentaires utilisable pour fabriquer des barres casse-croûte salées de bonne conservation au stockage. Elle a également pour objet un procédé pour préparer une telle composition ainsi que son utilisation pour la fabrication desdites barres.

Il existe à l'heure actuelle de nombreuses formes de produits alimentaires destinés aux casse-croûte, en-cas, smorgasbords, cocktails et apéritifs de toutes sortes, ces produits étant généralement disponibles préemballés en boîtes, sachets et autres, et pouvant être, de ce fait, manipulés et consommés aisément en tous lieux en dehors des repas. Parmi ces produits, on mentionnera plus particulièrement les aliments en forme de barres solides croquantes qu'on trouve plus souvent composés de mélanges aromatisés de farine, protéines et matières grasses, cuits au four et parfois enrobés d'amandes, de chocolat, de sucre cuit ou autres pâtes de fruits, etc. De tels aliments sont souvent désignés, faute de mieux, par le terme anglais de «snack-bars».

Il existe de nombreuses compositions alimentaires et de nombreux procédés permettant de confectionner de telles barres.

Ainsi, dans la publication: Food Tech. Rev., Noyes Data Corp. (1974) N° 18, 116 (GILLIES) on décrit des barres comestibles pour rations individuelles, des barres de matières alimentaires déshydratées et des barres à taux protéique élevé. Le brevet USP 3,903,308 décrit des barres comestibles à consommer sur place contenant un agglomérat de céréales rôties et de lait sucré complet déshydraté et d'autres additifs tels que dattes, noix de coco et autres. Suivant un autre brevet USP 3,911,142, on obtient des barres comestibles en mélangeant 16,67% de protéines (soja, petit-lait ou lait écrémé), 10% d'amidon (céréales ou pommes de terre), 2% d'aromates, du bicarbonate de soude, de la crème de tartre et de l'eau jusqu'à formation d'une pâte ferme que l'on divise en barres et qu'on fait ensuite rôtir ou frire suivant les goûts.

Dans le brevet USP 3,901,977, on décrit des barres chocolatées contenant environ 20% de chocolat au lait, 20% de chocolat ordinaire, 8% de beurre de cacao, 10% de caséinate de sodium, 1% de caséinate de calcium, 14% de sucre, 4% de sirop de maïs et 17% de beurre d'arachides.

Le document US-A-3,121,014 décrit des barres alimentaires de survie à base de fromage et de carbohydrates. Ces barres sont déshydratées jusqu'à un taux d'humidité ne dépassant pas 4%.

Le document US-A-3,729,325 décrit une émulsion stabilisée utilisable en tant qu'aliment ou pour la préparation d'aliments casse-croûte. Elle contient une graisse liquide, des lipides acides, de l'eau et des protéines dénaturables par la chaleur.

La durée de conservation des barres comestibles est liée à leur contenu en eau sous une forme accessible aux microorganismes. Ce contenu en eau disponible, désigné par Aw (water activity), est donné par le relation suivante $NH_2O/(Nd +$ $NH_2O) = Aw$ où $Nd$ est le nombre de moles dissoutes et $NH_2O$ est le nombre total de moles d'eau disponibles dans l'aliment. Aw peut également se définir en termes du rapport de la pression de vapeur d'eau dans l'aliment ($P_1H_2O$) à celle ($PH_2O$) à la même température.

Les barres de goût sucré ont une bonne conservation même hors de leur emballage à cause de la proportion en sucres dissous qu'elles contiennent et qui peut, parfois, atteindre 80% en poids total des matières de la barre (la valeur de Aw est alors de l'ordre de 0,5 à 0,8). Or, les microbes, levures et moisissures ne peuvent croître que si le terme Aw est supérieur à une limite de l'ordre de 0,70 à 0,85, ce qui explique que les barres sucrées se conservent facilement. En ce qui concerne les barres salées, le problème de la conservation est tout autre car, dans un tel cas, la concentration des additifs hydrosolubles de l'aliment (sel, par exemple) est relativement faible (en effet, pour obtenir une saveur salée convenable, le taux de sel ne devrait pas dépasser environ 3%). Il faut donc, dans ce cas, ajouter à l'aliment des agents préservateurs hydrosolubles en quantité suffisante pour abaisser autant que possible la valeur Aw, mais qui n'aient pas un effet négatif sur l'aspect, la structure et les qualités gustatives et alimentaires du produit. Par ailleurs, il faut bien évidemment également réduire autant que possible le contenu en eau de l'aliment, mais sans excès si on désire disposer d'une composition alimentaire qui, malgré ces exigences, conserve des qualités de souplesse et de fluidité suffisante pour qu'on puisse en confectionner des barres par les moyens habituels. De plus, les barres elles-mêmes doivent conserver une teneur en eau suffisante (par exemple d'au moins 15 à 20% en poids) pour que leurs qualités gustatives ne soient pas altérées.

Ce sont ces problèmes qu'on a résolus grâce à la présente invention qui concerne donc une composition (ou pâte) alimentaire utilisable pour la confection de barres casse-croûte salées (salted snack-bars) de texture croquante, non rôties et d'excellente conservation même hors de l'emballage, c'est-à-dire exposées à l'air ambiant.

La composition de l'invention comprend des ingrédients alimentaires, préservateurs et organoleptiques dont les composants sont les suivants:

(1) Protéines lactées concentrées,
(2) Compléments protéiques,
(3) Fécule,
(4) Matières grasses,
(5) Sel et autres additifs ou substances alimentaires hydrosolubles,
(6) Additifs organoleptiques ou conservateurs,
(7) Eau.

Elle est caractérisée par le fait que la quantité d'eau par rapport aux additifs hydrosolubles est telle que, suivant les définitions données précédemment, lorsqu'on a transformé la composition en barres casse-croûte ayant une teneur en eau de 15% en poids au minimum, par des opérations comprenant chauffage et moulage ou extrusion, elle se présente sous forme d'une masse solide et friable dont la teneur en eau active Aw ne dépasse pas 0,85. Lors du chauffage mentionné ci-dessus, la température interne de la masse ne dépasse pas de préférence 110°C. Un autre caractère avantageux de la composition est qu'elle peut ne contenir aucun sucre ou autre carbohydrate édulcorant de goût sucré.

De manière préférentielle, les proportions pondérales des divers composants ci-dessus sont les suivantes:

(1) et (2) 7 à 35%; (3) 5 à 30%; (4) 6 à 20%; (5) 10 à 25%; (6) 0,05 à 2,5% et (7) 15 à 50%, le restant à 100% éventuel étant constitué par des impuretés ou des résidus additionnels des ingrédients alimentaires dont la nature et la teneur (quelques % au plus) sont difficilement déterminables dans les conditions habituelles et comprennent, par exemple, des fibres, de l'humidité provenant de l'atmosphère ambiante, des sels minéraux, des cendres et autres.

Comme ingrédients alimentaires contenant des protéines lactées, on comprend toutes les protéines issues, par un processus quelconque, du lait, y compris les protéines de petit-lait ou de lait écrémé. Ces protéines pourront donc être dégraissées ou non suivant les traitements préliminaires qu'on aura fait subir au lait avant d'en extraire les protéines. De préférence, on utilise de la poudre de lait entier ou écrémé obtenue par les moyens habituels, par exemple par évaporation en films minces ou par pulvérisation sous vide. On trouvera des détails sur les protéines lactées (de même que sur les autres ingrédients alimentaires de la présente invention) dans l'ouvrage suivant: «Food Science» par N.N. Potter, AVI Books Publ. Company (1973).

Comme ingrédients contenant des compléments protéiques, on peut utiliser surtout les protéines végétales, animales et d'origine microbienne telles que, par exemple, les protéines de soja, d'arachides, de coton, de tournesol et d'autres plantes oléagineuses, les protéines carnées obtenues, par exemple, par broyage de viandes de seconde qualité comme les viandes pour saucisses, la gélatine et, encore, les protéines extraites des champignons, moisissures, levures et bactéries. On prépare de telles protéines en poudres déshydratées par les moyens habituels décrits par exemple dans «Soy Protein and Human Nutrition» par H.L. Wilcke *et al.*, Academic Press (1979).

Dans la composition de l'invention, on peut, le cas échéant, utiliser pour le composant (2) des protéines d'origine lactée, soit identiques, soit différentes de celles du composant (1). Par exemple, si le composant (1) provient de poudre de lait, le composant (2) peut être apporté par du fromage ou du séré déshydraté, les protéines de ces aliments constituant le complément protéique désiré.

Comme fécule, on utilise de préférence de l'amidon de maïs nature ou gélatinisé, quoique d'autres fécules puissent convenir, par exemple, celles de pomme de terre, blé, riz, manioc et autres céréales. La gélatinisation de l'amidon se fait en pulvérisant de l'eau sur celle-ci et en soumettant le tout à la chaleur. Un tel processus de gélatinisation est décrit, par exemple, dans W.R. Kerr, Chemistry and Industry of Starch (1950), Academic Press Inc., N.Y. USA.

Comme apport de matières grasses on peut utiliser le beurre, le saindoux, la margarine, les huiles végétales, le beurre de cacao, la cobérine (un corps gras naturel hydrogéné) et autres glycérides et matières grasses animales et végétales. De préférence, les matières grasses contiendront des antioxydants tels que des hydroxyanisoles ou hydroxytoluènes substitués par des groupes tert-butyle (BHA et BTH) (composants 6); cependant, de tels préservateurs peuvent également être apportés à la composition non préalablement mélangés aux corps gras.

Le sel utilisé est du sel ordinaire, par exemple du sel gemme ou du sel marin.

Les autres additifs prévus sous la désignation des composants (6) sont de plusieurs sortes et incluent les arômes, les agents préservateurs, les agents de gélification et de texturisation tels qu'alginates et carraghénates, certaines de ces substances pouvant d'ailleurs figurer, comme on vient de le voir au sujet des matières grasses, en tant que constituants intrinsèques des ingrédients riches en autres composants.

Parmi les arômes on peut citer les substances devant conférer à l'aliment certains goûts typiques ou pouvant être liés aux produits d'enrobage des barres lors de la fabrication de celles-ci, c'est-à-dire noix, noisettes, céréales grillées, amandes, etc. Comme goûts typiques on peut citer les goûts de viande fumée ou non, fromage, œufs et des condiments tels que poivre, cannelle, oignon et autres, de même que les épices telles que gingembre, muscade, curry et autres.

Parmi les agents de préservation, c'est-à-dire les additifs hydrosolubles de la catégorie (5) de composants qui, comme le sel, permettent par leur dissolution dans l'eau de l'aliment de diminuer le facteur Aw à une valeur inférieure à 0,85, on citera les carbohydrates non ou peu édulcorants tels que lactose, maltose, malto-dextrines, polydextrose et autres polysaccharides hydrosolubles, des polyols comme la glycérine, le propylène glycol et le sorbitol, et des sels minéraux.

D'autres additifs, enfin, peuvent également être prévus tels que vitamines, carotène, agar, benzoate de soude, sorbate de potassium et des colorants alimentaires. On peut aussi prévoir comme additifs des antioxydants tels que des aromatiques tert-butylés, notamment les hydroxy-toluène, hydroxy-anisole, propyl gallate et hydroxyquinone substitués par des tert-butyle ainsi que des antifongiques. Lorsque ces additifs sont hydrosolubles, on peut les classer en catégorie de composant (5); s'ils sont insolubles ou peu solubles, on les classe en catégorie (6).

Le procédé de préparation de la présente composition est basé sur le mélange intime d'une phase solide (A) et d'une phase liquide (B). La première phase (A), pulvérulente, résulte du mélange avec broyage et pulvérisation d'une partie ou de tous les ingrédients solides entrant dans la composition. Cette phase (A) comprend essentiellement les ingrédients insolubles ou peu solubles dans l'eau accompagnés ou non, en tout ou partie, des solides hydrophiles et/ou hydrosolubles. La phase liquide (B) renferme la matière grasse en dispersion dans tout ou partie de l'eau de la composition, celle-ci contenant encore, dissous ou dispersés, les ingrédients liquides et les solides hydrosolubles ou hydrophiles non incorporés à la phase (A). Lors du mélange final des phases solides (A) et liquides (B), on ajoute lentement en agitant à la phase A la phase B chauffée ou non et, le cas échéant, le reste de l'eau de la composition.

Suivant un premier mode d'exécution du procédé pour fabriquer la présente composition, on procède comme suit: on commence par mélanger à l'état sec les ingrédients comprenant essentiellement les composants (1), (2), (3), et ceux des additifs (5) et (6) qui sont solides de façon à obtenir une poudre (A1).

D'autre part, on prépare à chaud une émulsion homogène liquide (B1) des matières grasses (4), des autres additifs liquides, par exemple la glycérine le cas échéant, et d'une partie de l'eau (7). Finalement, on ajoute progressivement sous agitation l'émulsion B1 chaude et le reste de l'eau à la poudre A1 en agitation dans un mélangeur de manière que se forme une dispersion homogène fluide des matières solides dans la phase liquide.

Pour effectuer le prémélange (A1) on utilise de préférence un mixer ou moulin à rotation rapide. Pour le prémélange liquide (B1) on utilise de préférence un homogénéisateur chauffable. Pour effectuer le troisième mélange fournissant la composition suivant l'invention, on utilise de préférence un mélangeur HOBART (HOBART mixer).

Suivant un second mode d'exécution du présent procédé, on mélange à sec les ingrédients peu ou non hydrosolubles renfermant les composants (1), (2), (3) et (6), de façon à obtenir un mélange pulvérulent (A2); on dissout par ailleurs, dans toute l'eau (7) disponible, les ingrédients (5) et y disperse les matières grasses (4), de façon à obtenir une dispersion liquide (B2); puis, sous agitation, on ajoute lentement la dispersion B2 au mélange A2 de manière à obtenir une composition homogène.

Suivant un troisième mode d'exécution, on mélange d'abord sans eau tous les ingrédients solides et liquides disponibles mais à l'exception de l'ingrédient à base principale de fécule (en l'occurrence de la pomme de terre en purée) et de la matière grasse, cette opération fournissant un premier mélange (A3). Puis on prépare une dispersion de fécule dans l'eau (en l'occurrence, purée de pommes de terre), c'est-à-dire une purée aqueuse (contenant en plus, bien entendu, en très faible quantité, les protéines et sels minéraux de la pomme de terre) et on y disperse la matière grasse, ce qui donne une phase liquide (B3). Finalement on ajoute, sous agitation, la dispersion B3 au mélange A3 jusqu'à obtention d'un mélange homogène.

Pour utiliser la présente composition à la confection des barres casse-croûte, on la soumet à des opérations de formage où interviennent chaleur et moulage ou extrusion.

Si la composition contient relativement peu d'eau, par exemple entre 15 et 25%, elle possède une consistance de viscosité suffisante pour une mise en forme directe. On peut alors la mouler directement dans une presse à mouler ou l'extruder en forme au moyen d'une extrudeuse, ces opérations étant classiques et parfaitement connues de l'homme de métier. Puis, en complément, on soumet les barres moulées à l'action de la chaleur, par exemple une brève cuisson de quelques minutes, par exemple 10 min, dans un four préchauffé entre 150 et 200°C, par exemple entre 170 et 180°C, ce qui aura pour effet de transformer la pâte en une masse solide et friable appétissante et d'excellentes propriétés gustatives. Lors de ce chauffage, la température interne de la masse ne dépasse pas, de préférence, 110°C.

Si la composition contient une quantité d'eau relativement plus grande, par exemple entre 25 et 50%, elle est de consistance liquide. Dans ce cas, de préférence, on place celle-ci dans un mélangeur chauffant muni d'un agitateur à lames à rotation lente et, sous agitation, on la chauffe 15-30 min à 90-110°C puis 2-4 h à 60-80°C, période pendant laquelle la dispersion s'épaissit en une pâte épaisse et ferme suite à l'évaporation d'une partie de l'eau et, le cas échéant, la gélatinisation des féculents. On extrude alors la pâte directement à chaud ou, après l'avoir laissé refroidir à température ambiante, on la moule au moyen d'une presse et forme ainsi des barres qui se solidifient au repos en une matière relativement dure et croquante. Comme on l'a dit plus haut, cette opération de mise en forme est, en soi, bien connue. La teneur en eau de ces barres est d'environ 23 à 28%. Il n'est pas prévu de soumettre ces barres à un rôtissage pour préserver l'intégrité des matières protéiques qu'elles contiennent.

On peut compléter la fabrication des barres en les enrobant d'un revêtement fragmenté de céréales ou de noix rôties telles que pacanes, noisettes, amandes, noix de coco et autres de la manière suivante: on prépare un mélange liquide à environ 40°C de beurre de cacao, cellulose comestible, malto-dextrine, sel et lissogène de caroube et on enduit les barres brutes par ce liquide chaud, après quoi on les saupoudre avec le mélange d'enrobage fragmenté de manière que celui-ci adhère à la surface des barres par refroidissement.

On peut également envelopper les barres d'une couche de pâte supplémentaire formant enrobage. Une telle pâte peut être composée, suivant les connaissances traditionnelles, de farine, beurre, sel et eau, ingrédients qu'on pétrit ensemble dans un appareil approprié (par exemple un mélangeur de HOBART). Puis on étale la pâte ainsi formée, par exemple en couches minces d'environ 5 mm, et on en enveloppe les barres prémoulées. On fait ensuite subir aux barres ainsi revêtues un bref traitement au four chauffé entre 150 et 200°C, par exemple quelques minutes, cela afin de durcir le tout mais sans que la température interne de la barre ne dépasse, de préférence, 110°C.

Bien entendu, dans le cas où les barres sont extrudées, on peut opérer par coextrusion au moyen d'une extrudeuse à double buse concentrique, la filière centrale engendrant la barre proprement dite et la fillière annulaire le recouvrement d'enrobage. Le reste du traitement est alors identique à ce qui est mentionné ci-dessus.

Les barres peuvent être ensuite conditionnées et emballées suivant les moyens habituels afin d'être expédiées dans le commerce.

Les exemples spécifiques qui suivent illustrent l'invention.

### Exemple 1

On a préparé une composition alimentaire comprenant les ingrédients donnés dans la liste qui suit (% en poids). Dans cette liste, on donne, en regard de chaque ingrédient, le pourcentage pondéral des composants (1) à (7) dont ils sont formés. Lorsque le total de ceux-ci ne fait pas 100%, il faut comprendre que la partie manquante se compose de résidus mal déterminés tels que, par exemple, cendres minérales, humidité résiduelle, fibres, etc.

| Ingrédients | % en poids |
|---|---|
| a) Fromage ((2) 34; (4) 35; (5) 25) | 14,38 |
| b) Lait maigre ((1) 36; (4) 1; (5) 52) | 12,4 |
| c) Protéines lactées ((1) 50; (5) 50) | 7,19 |
| d) Amidon de maïs ((3) 100) | 7,19 |
| e) Margarine ((4) 90) | 4,96 |
| f) Noix pilées ((2) 15; (3) 15; (4) 60) | 3,47 |
| g) Sel ((5) 100) | 1,6 |
| h) Glycérine ((5) 100) | 0,10 |
| i) Sorbate de potassium ((5) 100) | 0,10 |
| j) Poivre, muscade, carotène ((6) 100) | 0,16 |
| k) Eau ((7) 100) | 48,45 |
| | 100 |

Le total des composants (1) à (7) obtenu à partir des chiffres ci-dessus est:

| Composants | % en poids |
|---|---|
| (1) + (2) | 13,474 |
| (3) | 7,7105 |
| (4) | 11,703 |
| (5) | 15,348 |
| (6) | 0,16 |
| (7) | 48,45 |
| indéterminés | 3,1545 |
| | 100 |

Dans un mélangeur-broyeur, on forme une masse pulvérulente homogène (A1) à partir des ingrédients solides a, b, c, d, f, g, i, j. Puis, dans un homogénéiseur porté à environ 40-50°C, on émulsionne les composants e, h et environ la moitié de l'eau k, de façon à obtenir une phase homogène (B1).

On place la poudre A dans un mélangeur de HOBART et, sous agitation, on ajoute progressivement le liquide B1 et le reste de l'eau k à la poudre A1 jusqu'à obtention d'une dispersion homogène et fluide constituant une forme d'exécution de la composition de l'invention.

On convertit ensuite cette composition en barres casse-croûte en la plaçant dans un mélangeur chauffant et, sous douce agitation, on la chauffe 20 min à 97°C, puis 3 h à 70°C ce qui provoque l'évaporation d'une partie de l'eau et la formation d'une pâte épaisse et ferme. On laisse cette pâte reposer environ 24 h à température ambiante puis on l'introduit dans la presse d'une extrudeuse et on l'extrude en barres d'environ 10-15 cm de long et de 1-2 cm² de section, la pression d'extrusion étant d'environ 50 bar. Il est bien entendu qu'on pourrait également former les barres par d'autres moyens, notamment par moulage ou pressage. Après repos de 12 h, les barres se sont complètement solidifiées et ont acquis une texture friable et croquante sous la dent.

On prépare, par ailleurs, une composition liquide liante pour enrobage en mélangeant à 40-50°C, en poids, 50,9% de margarine, 23% de malto-dextrine, 22% de lissogène de caroube, 2% de sel, 0,1% de lécithine et 1,93% de cellulose cristalline (Solka Floc). On enduit les barres à chaud de ce mélange puis on les recouvre, encore à chaud, d'une poudre grossière (granulométrie d'environ 1 à 5 mm) de noix broyées. Puis on a procédé à l'emballage des barres ainsi terminées dans un sachet de cellophane stérile.

On a procédé à l'analyse des barres ci-dessus afin de déterminer le contenu en eau et le facteur Aw. On a utilisé comme méthode d'analyse, la méthode standard décrite dans T.P. LABUZA & L. Mc NALLY: Stability of Intermediate Moisture Foods, J. Food Sci., *37*, 154 (1972). On a trouvé comme résultat 25% d'eau et Aw = 0,82-0,85.

Les barres de cet exemple ont été soumises à un groupe de dégustateurs entraînés qui se sont accordés pour qualifier ces barres d'appétissantes, nourrissantes et de goût excellent.

### Exemple 2

On a procédé comme dans l'exemple 1 au moyen des aliments suivants:

| Ingrédients | % en poids |
|---|---|
| a) Fromage ((2) 34; (4) 35; (5) 25) | 13 |
| b) Lait maigre ((1) 36; (4) 1; (5) 52) | 10 |
| c) Protéines lactées ((1); 75; (5) 25) | 7 |
| d) Lactose ((3) 100) | 3,97 |
| e) Amidon de maïs ((3) 100) | 7,19 |
| f) Margarine ((4) 90) | 4,96 |
| g) Sel ((5) 100) | 1,6 |
| h) Amandes ((2) 19; (3) 20; (4) 54) | 3,47 |
| i) Glycérine ((5) 100) | 0,10 |
| j) Sorbate de potassium ((5) 100) | 0,10 |
| k) Poivre, muscade, carotène, arôme de fromage bleu ou arôme de jambon fumé ((6) 100) | 0,16 |
| l) Eau ((7) 100) | 48,45 |
| | 100 |

Les colonnes qui suivent fournissent la somme des composants (1) à (7) suivant les définitions données précédemment:

| Composants | % en poids |
|---|---|
| (1) + (2) | 13,9293 |
| (3) | 11,854 |

| Ingrédients | % en poids |
|---|---|
| (4) | 11,1638 |
| (5) | 10,4 |
| (6) | 0,16 |
| (7) | 48,45 |
| indéterminés | 4,0529 |
| | 100 |

On a procédé au mélange des ingrédients alimentaires comme décrit à l'exemple 1 de manière à former deux compositions, l'une aromatisée «jambon fumé» et l'autre «fromage bleu». On a ensuite formé ces compositions en barres, toujours comme décrit à l'exemple 1 et, après les avoir enduites de liant à chaud, on les a enrobées de poudre de céréales broyées. Les barres ainsi préparées ont été goûtées par des dégustateurs qui les ont jugées appétissantes et nourrissantes. La teneur en eau de ces barres était de 24-25% et la valeur de Aw (déterminée comme indiqué à l'exemple 1) de 0,8 environ.

### Exemple 3

| Ingrédients alimentaires | % en poids |
|---|---|
| a) Fromage ((1) 34; (4) 35; (5) 25) | 10,50 |
| b) Fromage bleu ((1) 35,8; (4) 50,8; (5) 3,33) | 3,47 |
| c) Lait maigre ((1) 36; (4) 1; (5) 52) | 10 |
| d) Protéines lactées ((1) 50; (5) 50) | 7,6 |
| e) Lactose ((3) 100) | 3 |
| f) Amidon de maïs ((3) 100) | 7,19 |
| g) Margarine ((4) 90) | 4,96 |
| h) Sel ((5) 100) | 1,16 |
| i) Glycérine ((5) 100) | 3,47 |
| j) Sorbate de Potassium ((5) 100) | 0,10 |
| k) Poivre, muscade, carotène ((6) 100) | 0,10 |
| l) Eau ((7) 100) | 48,45 |
| | 100 |

Après calcul comme expliqué précédemment, on a obtenu la composition en poids suivante des composants (1) à (7) suivant l'invention:

| Composants | % en poids |
|---|---|
| (1) + (2) | 12,21 |
| (3) | 10,19 |
| (4) | 10 |
| (5) | 15,02 |
| (6) | 0,10 |
| (7) | 48,45 |
| indéterminés | 4,03 |
| | 100 |

On a préparé, au moyen de la composition ci-dessus extrudée à chaud immédiatement après malaxage, des barres qu'on a enduites à chaud d'une composition liquide liante comprenant (en poids): lait en poudre (à 25% de matières grasses) 20%; malto-dextrine 30%; cellulose alimentaire 3%; amidon de pomme de terre 7%; beurre de cacao 40%. Pour réaliser cette composition liante, on a chauffé le mélange de ses composants à 50°C, on l'a tempéré à 25°C et on l'a réchauffé à 32°C pour l'opération d'enduction. Après enduction, on a revêtu les barres par des amandes broyées. Des dégustateurs auxquels on a donné à goûter ces barres se sont déclarés satisfaits par leur consistance croquante à la mastication et leurs propriétés organoleptiques. Aw = environ 0,8.

### Exemple 4

On a procédé exactement comme décrit aux exemples précédents au moyen des ingrédients suivants:

| Ingrédients | % en poids |
|---|---|
| a) Fromage ((1) 34; (4) 35; (5) 25) | 10,50 |
| b) Jambon fumé ((2) 38; (4) 55; (5) 0,67) | 4,15 |
| c) Lait maigre ((1) 36; (4) 1; (5) 52) | 10 |
| d) Protéines lactées ((1) 50; (5) 50) | 6,6 |
| e) Protéines végétales (soja) ((1) 67; (4) 1,5; (5) 0,5) | 1,7 |
| f) Amidon de maïs ((3) 100) | 7,19 |
| g) Margarine ((4) 90) | 4,96 |
| h) Sel ((5) 100) | 1 |
| i) Glycérine ((5) 100) | 3,47 |
| j) Sorbate de potassium ((5) 100) | 0,10 |
| k) Poivre, muscade, carotène ((6) 100) | 0,10 |
| l) Eau ((7) 100) | 50,23 |
| | 100 |

La composition, suivant l'invention, est donc la suivante:

| Composants | % en poids |
|---|---|
| (1) + (2) | 13,447 |
| (3) | 7,19 |
| (4) | 10,552 |
| (5) | 14,63 |
| (6) | 0,10 |
| (7) | 50,23 |
| indéterminés | 3,85 |
| | 100 |

On a transformé cette composition en barres comestibles comme décrit à l'exemple 1 par extrusion à chaud et on a revêtu ces barres d'un revêtement de noix broyées en utilisant, comme liant, le mélange liquide décrit à l'exemple 3. Ces barres avaient une teneur en eau d'environ 27% et un Aw d'environ 0,85.

Ces barres ont été entreposées quatre semaines, sans les emballages, dans un local non climatisé à température et sous atmosphère ambiantes. Après cette période, on n'a pas constaté de contamination visible par des moisissures et les propriétés organoleptiques des barres n'étaient pas sensiblement altérées; elles étaient donc encore propre à la consommation.

### Exemple 5

On a procédé à la préparation de barres casse-croûte au moyen des ingrédients suivants (la proportion des composants (1) à (7) est donnée comme aux exemples précédents):

| Ingrédients | % en poids |
|---|---|
| a) Ingrédient fromage GL△ ((2) 35; (4) 35; (5) 25) | 21,26 |
| b) Lait maigre en poudre ((1) 36; (4) 1; (5) 52) | 18,93 |
| c) Protéine lactée (Miprotin 50*) ((1) 50; (5) 50) | 7,61 |
| d) Gélatine ((1) 98) | 2,42 |
| e) Amidon de maïs ((3) 100) | 11,0 |
| f) Amidon (Instant cleargel**) ((3) 100) | 1,2 |
| g) Matières grasses du lait ((4) 80; (5) 10; (7) 10) | 14,10 |
| h) Antioxydant (OXYNEX***) ((6) 100) | 0,05 |
| i) Sel ((5) 100) | 1,2 |
| j) Sorbate de potassium ((5) 100) | 0,12 |
| k) Sirop de maïs ((5) 70; (7) 30) | 2,46 |
| l) Glycérine ((5) 100) | 0,6 |
| m) Pyrophosphate de soude ((5) 100) | 0,4 |
| n) Muscade ((6) 100) | 0,04 |
| o) Poivre ((6) 100) | 0,12 |
| p) Eau ((7) 100) | 18,4 |

△ Ingrédient de la Société Food Industry Speci-alities

\* Nom commercial de la Société TONI MOLKE-REI, Zurich

\*\* Amidon de maïs modifié par précuisson

\*\*\* Antioxydant pour matières grasses de la Société MERCK

Le total des composants (1) à (7) obtenu à partir des chiffres ci-dessus est:

| Composants | % en poids |
|---|---|
| (1) + (2) | 20,44 |
| (3) | 12,2 |
| (4) | 18,91 |
| (5) | 24,41 |
| (6) | 0,21 |
| (7) | 20,54 |
| indéterminés | 3,29 |
| | 100,00 |

Dans un mélangeur-broyeur, on a formé une masse pulvérulente homogène (A2) à partir des ingrédients a), b), c), d), e), f), n) et o). Puis, dans un homogénéiseur on a placé l'eau p) ainsi que les ingrédients solubles i) à m) et, après dissolution, on a émulsionné dans le milieu la matière grasse g) additionnée de l'antioxydant h) (dispersion B2). On a ensuite placé la phase pulvérulente A2 dans un mélangeur de HOBART et, sous agitation, on a lentement ajouté la dispersion B2 jusqu'à obtention d'une pâte homogène. Cette pâte a été extrudée dans une extrudeuse de laboratoire de manière à former des barres de 12 cm de longueur et de 2,5 cm² de section sous une pression de 30-40 bar. Ces barres avaient une consistance assez ferme pour ne pas se déformer sensiblement au repos.

Par ailleurs, on a préparé, suivant les moyens habituels, une pâte d'enrobage à partir, en poids, de 57% de farine blanche, 0,4% de sel, 24% d'eau et 19% de beurre. On a étalé cette pâte jusqu'à une épaisseur de 0,5 cm, on en a découpé les lopins de dimension adéquate pour en entourer les barres, on a enrobé celles-ci dans lesdits lopins de pâte dont on a humidifié les bords afin qu'ils adhèrent l'un contre l'autre lors du repliage. Finalement, après avoir appliqué une engobe de jaune d'œuf, on a porté le tout 10 min au four préchauffé à 180°C. Pendant cette opération, on a constaté, par mesure au moyen d'un thermocouple placé dans le corps de certaines barres, que la température de cuisson dans la masse de celles-ci ne dépassait pas 110°C.

On a ainsi obtenu des barres croustillantes, appétissantes, nourrissantes et d'excellente conservation au stockage.

*Exemple 6*

On a utilisé les ingrédients suivants dans la liste desquels la proportion des composants (1) à (7) figure entre parenthèses:

| Ingrédients | % en poids |
|---|---|
| a) Fromage GL ((2) 35; (4) 35; (5) 25) | 21,67 |
| b) Lait maigre en poudre ((1) 36; (4) 1; (5) 52) | 7,39 |
| c) Protéine lactée (Miprotin 50) ((1) 50; (5) 50) | 7,27 |
| d) Gélatine ((9) 98) | 1,97 |
| e) Farine de blé ((2) 10; (3) 75; (7) 10) | 9,7 |
| f) Purée de pommes de terre ((3) 18; (2) 2; (7) 80) | 29,56 |
| g) Matières grasses du lait ((4) 80; (5) 10; (7) 10) | 13,99 |
| h) OXYNEX ((6) 100) | 0,05 |
| i) Sel ((5) 100) | 1,38 |
| j) Sorbate de potassium ((5) 100) | 0,12 |
| k) Glycérine ((5) 100) | 0,49 |
| l) Bicarbonate de sodium ((6) 100) | 1,48 |
| m) Sorgitol ((5) 100) | 4,93 |

Le total des composants (1) à (7) est donc le suivant:

| Composants | % en poids |
|---|---|
| (1) + (2) | 17,35 |
| (3) | 12,6 |
| (4) | 18,84 |
| (5) | 21,22 |
| (6) | 1,53 |
| (7) | 26,02 |
| indéterminés | 2,42 |
| | 100,00 |

L'ingrédient f) (purée de pommes de terre) a été obtenu par cuisson à la vapeur de pommes de terre (10 min à 120°C). Dans cette purée, on a homogénéisé les matières grasses g), ce qui a fourni une dispersion (B3); puis on a ajouté cette phase (B3) à un mélange homogène (A3) de tous les ingrédients restants dans un mélangeur de HOBART jusqu'à obtention d'une pâte homogène.

On a ensuite transformé cette pâte en barres par coextrudage dans une extrudeuse à double filière, la filière concentrique extérieure étant alimentée par une pâte d'enrobage identique à celle décrite à l'exemple précédent. Les barres crues ainsi co-extrudées ont été badigeonnées de jaune d'œuf puis cuites 10 min dans un four préchauffé à 180°C. On a ainsi obtenu des barres appétissantes et nourrissantes que des dégustateurs ont jugées excellentes au goût. Leur conservation hors emballage dans les conditions usuelles a été jugée satisfaisante.

## Revendications

1. Composition alimentaire en dispersion aqueuse fluide pour la fabrication de barres casse-croûte (snack-bars) salées, solides et croquantes formée d'ingrédients alimentaires comprenant les composants suivants: (1) concentré de protéines lactées, (2) compléments protéiques, (3) fécule, (4) matières grasses, (5) sel et autres additifs ou substances alimentaires hydrosolubles, (6) autres additifs préservateurs ou organoleptiques, (7) eau, caractérisée par le fait que la quantité d'eau par rapport aux additifs hydrosolubles est telle que, lorsqu'on a transformé la composition en barres casse-croûte ayant une teneur en eau de 15% en poids au minimum, par des opérations comprenant chauffage et moulage ou extrusion, elle se présente sous la forme d'une masse solide et friable dont la valeur Aw ne dépasse pas 0,85.

2. Composition suivant la revendication 1, caractérisée par le fait qu'elle ne renferme aucun sucre édulcorant.

3. Composition suivant la revendication 1, caractérisée par le fait que les proportions pondérales des composants (1) à (7) sont les suivantes:

| | |
|---|---|
| (1) et (2) | 7-25% |
| (3) | 5-30% |
| (4) | 6-20% |
| (5) | 10-25% |
| (6) | 0,05 à 2,5% |
| (7) | 15-50% |

le restant à 100% étant constitué par des substances résiduelles indéterminées inhérentes aux ingrédients utilisés.

4. Composition suivant la revendication 1, caractérisée par le fait que les protéines lactées (1) sont choisies parmi celles du lait en poudre entier, du lait en poudre écrémé et du lactosérum.

5. Composition suivant la revendication 1, caractérisée par le fait que les compléments protéiques sont choisis parmi les protéines lactées, les protéines animales, les protéines végétales et les protéins microbiennes.

6. Composition suivant la revendication 5, caractérisée par le fait que les protéines animales sont choisies parmi la poudre de viande séchée, les protéines de poissons et crustacés, les protéines végétales sont choisies parmi les farines de soja, de tournesol, de coton et d'arachides, et les protéines microbiennes sont choisies parmi les champignons, les levures et les bactéries.

7. Composition suivant la revendication 1, caractérisée par le fait que la fécule est choisie parmi l'amidon de maïs, de pomme de terre, de blé, de riz et de manioc et les pommes de terre entières.

8. Composition suivant la revendication 1, caractérisée par le fait que les matières grasses sont choisies parmi les matières grasses animales, lard, beurre, saindoux et les matières grasses végétales, margarine, cobérine et beurre de cacao.

9. Composition suivant la revendication 1, caractérisée par le fait que les additifs hydrosolubles sont choisis parmi les carbohydrates non ou peu sucrants, la glycérine, l'éthylène glycol, le sorbitol, et les malto-dextrines.

10. Composition suivant la revendication 1, caractérisée par le fait que les autres additifs alimentaires sont choisis parmi les arômes, les vitamines, les sels minéraux, les colorants, les agents de gélification et de texturisation, les antioxydants et les antifongiques comme le sorbate de potassium.

11. Procédé de préparation de la composition suivant la revendication 1, caractérisé par le fait qu'on pulvérise et mélange une partie de ses ingrédients, plus particulièrement ceux où prédominent les composants (1), (2) et (6) accompagnés ou non, en tout ou partie, des ingrédients riches en composants (3) et (5), de façon à obtenir une phase pulvérulente solide (A); on disperse de façon homogène la matière grasse (4) dans tout ou partie de l'eau (7) contenant, en dispersion ou dissous, les ingrédients à composants (3) et (5) non déjà incorporés à la phase (A) de manière à obtenir une phase liquide (B); puis on mélange intimement, sous agitation, les phases (A) et (B) en y ajoutant encore, le cas échéant, le reste de l'eau (7), le tout constituant la composition.

12. Procédé suivant la revendication 11, caractérisé par le fait qu'on mélange à l'état sec les ingrédients renfermant essentiellement les composants (1), (2), (3), (6) et ceux parmi les ingrédients (5), qui sont solides de façon à obtenir un prémélange (A1) en poudre, on émulsionne à chaud les matières grasses (4) et ceux des ingrédients à composants (5) qui sont liquides avec une partie de l'eau (7) afin d'obtenir un prémélange liquide homogène (B1) et, sous agitation, on ajoute progressivement l'émulsion chaude B1 et l'eau restante au prémélange A1 de façon que se forme une dispersion fluide des matières solides dans la phase liquide, le tout constituant la composition.

13. Procédé suivant la revendication 11, caractérisé par le fait qu'on mélange à sec les ingrédients renfermant essentiellement les composants (1), (2), (3) et (6) de façon à obtenir un mélange pulvérulent (A2); on dissout dans l'eau (7) les ingrédients (5) et on disperse dans cette solution les matières grasses (4), de façon à obtenir une dispersion liquide (B2); puis, sous agitation, on ajoute lentement la dispersion (B2) au mélange (A2) jusqu'à obtention d'une composition homogène.

14. Procédé suivant la revendication 11, caractérisé par le fait qu'on mélange sans l'eau tous les ingrédients (1), (2) et (6) solides et liquides disponibles à l'exception de la fécule (3) et d'une faible proportion de protéines (2) et on obtient une phase (A3); on prépare une purée aqueuse contenant l'eau (7), la fécule (3) et ladite faible proportion de protéines et on y disperse la matière grasse de manière à obtenir une dispersion aqueuse (B3); puis, sous agitation, on ajoute ladite dispersion aqueuse B3 au mélange A3 jusqu'à obtention d'une composition homogène.

15. Utilisation de la composition suivant la revendication 1, pour la confection de barres casse-croûte fermes et croquantes, caractérisée par le fait qu'on la soumet à des opérations comprenant (1) cuisson et (2) mise en forme par moulage ou extrusion.

16. Utilisation suivant la revendication 15, caractérisée par le fait que l'opération (2) précède l'opération (1) lorsque la composition comprend d'environ 15 à 25% d'eau tandis que c'est l'ordre inverse qui prévaut lorsque la teneur en eau dépasse 25% environ.

17. Utilisation suivant la revendication 16, la composition comprenant plus de 25% d'eau, caractérisée par le fait qu'on chauffe celle-ci sous agitation 15-30 min à 90-110°C puis 2-4 h à 60-80°C de manière qu'elle s'épaississe en une pâte ferme par gélatinisation des féculents et évaporation d'une partie de l'eau puis qu'on moule la pâte en barres, à chaud ou à température ambiante, et qu'on laisse celles-ci se solidifier au repos en une masse friable et croquante.

18. Utilisation suivant la revendication 17, caractérisée par le fait qu'après solidification, on enduit les barres d'un liquide de revêtement chaud puis qu'on enrobe les barres avec un mélange comestibles de revêtement en particules de manière que ces particules adhérent aux barres par l'intermédiaire de l'enduit solidifié par refroidissement.

19. Utilisation suivant la revendication 18, caractérisée par le fait que le mélange de revêtement est un mélange fondu de graisses végétales, de carbohydrates, de sel et d'arômes alimentaires.

20. Utilisation suivant la revendication 18, caractérisée par le fait que le mélange d'enrobage comprend, au choix, noisettes, amandes et autres graines oléagineuses à l'état broyé ou pilé, des céréales expansées ou rôties et des amidons expansés à l'air ou à l'huile.

21. Utilisation suivant la revendication 16, la composition comprenant moins de 25% d'eau environ, caractérisée par le fait qu'on la moule ou on l'extrude en forme puis qu'on cuit les formes moulées pendant quelques minutes dans un four préchauffé à 150-200°C.

22. Utilisation suivant la revendication 21, caractérisée par le fait que la température interne de la masse des barres ne dépasse pas 110°C pendant la cuisson.

23. Utilisation suivant la revendication 21, caractérisée par le fait qu'avant cuisson on enrobe la barre dans une couche de pâte d'enrobage faite à partir de farine, beurre, eau et sel.

24. Utilisation suivant la revendication 16, caractérisée par le fait qu'on coextrude les barres avec une pâte d'enrobage au moyen d'une extrudeuse à double filière, les barres elles-mêmes étant extrudées par la filière centrale de celle-ci tandis que la pâte d'enrobage est extrudée par la seconde filière, disposée concentriquement à la première, le tout de manière que les barres extrudées soient revêtues d'une couche de pâte d'enrobage, l'opération de cuisson étant ensuite effectuée sur les barres enrobées et ayant pour effet de durcir simultanément les barres et leur revêtement d'enrobage.

## Patentansprüche

1. Nahrungsmittel-Zusammensetzung in wässeriger fluider Dispersion zur Herstellung von haltbaren und knusprigen Salzstangen (snack-bars) aus Nahrungsmittelzutaten, die folgende Bestandteile enthalten:
(1) Milchprotein-Konzentrat
(2) Eiweissergänzungen
(3) Stärkemehl
(4) Fettstoffe
(5) Salz und andere Zusätze oder wasserlösliche Nahrungsmittelsubstanzen
(6) andere haltbarmachende oder organoleptische Zusätze
(7) Wasser
dadurch gekennzeichnet, dass die Menge an Wasser im Verhältnis zu den wasserlöslichen Zusätzen eine solche ist, dass, wenn man die Salzstangen-Zusammensetzung mit einem Wassergehalt von mindestens 15 Gew.-% umgewandelt hat durch Vorgänge, die Erhitzen und Formen oder Extrudieren umfassen, sie sich in Form einer haltbaren und brechbaren Masse darstellt, deren Aw-Wert 0,85 nicht überschreitet.

2. Zusammensetzung nach Anspruch 1, dadurch gekennzeichnet, dass sie keinen absüssenden Zucker enthält.

3. Zusammensetzung nach Anspruch 1, dadurch gekennzeichnet, dass die Gewichtsverhältnisse der Bestandteile (1) bis (7) die folgenden sind:

| | |
|---|---|
| (1) und (2) | 7 bis 25% |
| (3) | 5 bis 30% |
| (4) | 6 bis 20% |
| (5) | 10 bis 25% |
| (6) | 0,05 bis 2,5% |
| (7) | 15 bis 50% |

wobei der Rest auf 100% aus unbestimmten Restsubstanzen besteht, die den verwendeten Zutaten innewohnen.

4. Zusammensetzung nach Anspruch 1, dadurch gekennzeichnet, das die Milchproteine (1) unter denen des Vollmilchpulvers, des Magermilchpulvers und der Molke ausgewählt sind.

5. Zusammensetzung nach Anspruch 1, dadurch gekennzeichnet, dass die Eiweissergänzungen ausgewählt sind unter den Milchproteinen, den tierischen Proteinen, den pflanzlichen Proteinen und den mikrobiellen Proteinen.

6. Zusammensetzung nach Anspruch 5, dadurch gekennzeichnet, dass die tierischen Proteine ausgewählt sind unter dem Trockenfleischpulver, den Fisch- und Schalentierproteinen, dass die pflanzlichen Proteine ausgewählt sind unter den Soja-, Sonnenblumen-, Baumwoll- und Erdnussmehlen, und dass die mikrobiellen Proteine ausgewählt sind unter den Pilzen, den Hefen und den Bakterien.

7. Zusammensetzung nach Anspruch 1, dadurch gekennzeichnet, dass das Stärkemehl ausgewählt ist unter den Mais-, Kartoffel-, Getreide-, Reis- und Maniokstärken und den ganzen Kartoffeln.

8. Zusammensetzung nach Anspruch 1, dadurch gekennzeichnet, dass die Fettstoffe ausgewählt sind unter den tierischen Fettstoffen Speck, Butter, Schweineschmalz und den pflanzlichen Fettstoffen Margarine, Coberin und Kakaobutter.

9. Zusammensetzung nach Anspruch 1, dadurch gekennzeichnet, dass die wasserlöslichen Zusätze ausgewählt sind unter den nicht oder wenig süssenden Kohlehydraten, dem Glyzerin, dem Glycoäthylen, dem Sorbit und den Malzzucker-Dextrinen.

10. Zusammensetzung nach Anspruch 1, dadurch gekennzeichnet, dass die anderen Nahrungsmittel-Zusätze ausgewählt sind unter den Aromen, den Vitaminen, den Mineralsalzen, den Farbstoffen, den Gelatinierungs- und Texturierungsmitteln, den Antioxidentien und den pilzbefallverhütenden Mitteln wie Kaliumsorbat.

11. Verfahren zur Herstellung der Zusammensetzung entsprechend Anspruch 1, dadurch gekennzeichnet, dass man einen Teil ihrer Zutaten pulverisiert und mischt, und zwar insbesondere diejenigen, bei denen die Bestandteile (1), (2) und (6) ganz oder teilweise begleitet sind von Zutaten, die reich an Bestandteilen (3) und (5) sind, dergestalt, dass eine haltbare pulverförmige Phase (A) erhalten wird;
dass man auf homogene Weise den Fettstoff (4) in dem gesamten oder einem Teil des Wassers (7) dispergiert, das in Dispersion oder aufgelöst die Zutaten der Bestandteile (3) und (5) enthält, die noch nicht von der Phase (A) umfasst sind, wodurch eine Flüssigphase (B) erhalten wird;
dass man danach unter Rühren die Phasen (A) und (B) innig miteinander vermischt und gegebenenfalls noch den Rest des Wassers (7) beimengt, wobei das Ganze die Zusammensetzung bildet.

12. Verfahren nach Anspruch 11, dadurch gekennzeichnet, dass man in trockenem Zustand die Zutaten mischt, die im wesentlichen die Bestandteile (1), (2), (3), (6) und diejenigen der Zutaten (5) umfassen, die haltbar sind, dergestalt, dass eine Vormischung (A1) in Pulverform erhalten wird;
dass man dann die Fettstoffe (4) und diejenigen der Zutaten mit Bestandteilen (5), die flüssig sind, mit einem Teil des Wassers (7) unter Wärmeeinwirkung emulgiert, um eine homogene flüssige Vormischung (B1) zu erhalten, und
dass man dann unter Rühren nach und nach die warme Emulsion B1 und das Restwasser der Vormischung A1 zufügt dergestalt, dass sich eine fluide Dispersion der der Feststoffe in Flüssigphase bildet, wobei das ganze die Zusammensetzung bildet.

13. Verfahren nach Anspruch 11, dadurch gekennzeichnet, dass man die Zutaten trocken mischt, die im wesentlichen die Bestandteile (1), (2), (3) und (6) enthalten, dergestalt, dass man eine pulverförmige Mischung (A2) erhält;
dass man die Zutaten (5) im Wasser (7) auflöst und man in dieser Lösung die Fettstoffe (4) dispergiert dergestalt, dass man eine flüssige Dispersion (B2) erhält;
dass man danach unter Rühren langsam die Dispersion (B2) der Mischung (A2) zufügt, bis man eine homogene Zusammensetzung erhält.

14. Verfahren nach Anspruch 11, dadurch gekennzeichnet, dass man alle verfügbaren festen und flüssigen Zutaten (1), (2) und (6) ohne das Wasser mit Ausnahme des Stärkemehls (3) und mit einem geringen Gehalt an Proteinen (2) mischt und eine Phase (A3) erhält;
dass man einen wässerigen Brei bereitet, der das Wasser (7), das Stärkemehl (3) und den geringen Gehalt an Proteinen enthält;
dass man darin den Fettstoff löst, wodurch man eine wässerige Dispersion (B3) erhält;
und dass man dann unter Rühren die wässerige Dispersion (B3) der Mischung (A3) beifügt, bis man eine homogene Zusammensetzung erhält.

15. Verwendung der Zusammensetzung nach Anspruch 1 zur Herstellung von harten und knusprigen Salzstangen, dadurch gekennzeichnet, dass man sie Arbeitsgängen unterwirft, die (1) Garen und (2) Informbringen durch Abformen oder Extrudieren umfassen.

16. Verwendung nach Anspruch 15, dadurch gekennzeichnet, dass der Arbeitsgang (2) dem Arbeitsgang (1) vorausgeht, wenn die Zusammensetzung etwa 15 bis 26% Wasser enthält, während das Gegenteil der Fall ist, wenn der Wassergehalt etwa 25% überschreitet.

17. Verwendung nach Anspruch 16, wobei die Zusammensetzung mehr als 25% Wasser enthält, dadurch gekennzeichnet, dass man diese unter Rühren 15 bis 20 Minuten lang auf 90 bis 110°C erhitzt, dann zwei bis vier Stunden bei 60 bis 80°C dergestalt, dass sie sich durch Gelatinieren der Stärkemehle und Verdampfung eines Teils des Wassers in eine feste Paste verdickt,
dass man die Paste dann unter Wärmeeinwirkung oder bei Umgebungstemperatur in Stangen formt, und
dass man diese in Ruhe in eine zerbrechliche und knusprige Masse hart werden lässt.

18. Verwendung nach Anspruch 17, dadurch gekennzeichnet, dass man nach der Verfestigung die Stangen mit einem warmen flüssigen Überzug beschichtet, dann die Stangen mit einer essbaren Mischung eines Überzugs aus Teilchen umgibt dergestalt, dass diese Teilchen an den Stangen mit Hilfe der fest gewordenen Beschichtung durch Abkühlen haften bleiben.

19. Verwendung nach Anspruch 18, dadurch gekennzeichnet, dass die Überzugsmischung eine geschmolzene Mischung aus pflanzlichen Fetten, Kohlehydraten, Salz und Speisearomen ist.

20. Verwendung nach Anspruch 18, dadurch gekennzeichnet, dass die umhüllende Mischung wahlweise Nüsse, Mandeln und andere ölige Fette in gemahlenem oder zerstampftem Zustand, expandiertes oder geröstetes Geteide und mit Luft oder Öl expandierte Stärkemehle enthält.

21. Verwendung nach Anspruch 16, wobei die Zusammensetzung weniger als etwa 25% Wasser enthält, dadurch gekennzeichnet, dass man sie formgiesst oder in Form extrudiert und dann die gegossenen Formen einige Minuten lang in einem auf 150 bis 200°C vorgewärmten Ofen gart.

22. Verwendung nach Anspruch 21, dadurch gekennzeichnet, dass die Innentemperatur der Stangenmasse während des Garens 110°C nicht übersteigt.

23. Verwendung nach Anspruch 21, dadurch gekennzeichnet, dass man die Stange vor dem Garen in eine Schicht aus einer Umhüllungspaste einhüllt, die aus Mehl, Butter, Wasser und Salz besteht.

24. Verwendung nach Anspruch 16, dadurch gekennzeichnet, dass man die Stangen mit einer Umhüllungspaste gemeinsam mittels eines Extruders mit doppeltem Extrudermundstück extrudiert, wobei die Stangen als solche durch das zentrale Mundstück derselben extrudiert werden, während die umhüllende Paste durch das zweite Mundstück extrudiert wird, das konzentrisch zu dem ersten angeordnet ist, dergestalt, dass die extrudierten Stangen mit einer Schicht aus Überzugspaste bedeckt sind, wobei der Garvorgang dann auf den umhüllenden Stangen stattfindet und zur Folge hat, dass gleichzeitig die Stangen und ihr umhüllender Überzug gehärtet werden.

## Claims

1. Edible composition in the form of a fluid aqueous dispersion usable for manufacturing crunchy salty solid snack-bars made of edible ingredients comprising the following components: (1) lactic protein concentrate, (2) protein complement, (3) starch, (4) fatty substances, (5) salt and other edible hydrosoluble additives or substances, (6) other preservative or organoleptic additives, (7) water, characterized in that the amount of water relative to the hydrosoluble additives is such that, when the composition has been converted into snack-bars with a minimum water content of 15% by weight through operations that include heating and casting or extrusion, it acquires the form of a solid and friable mass whose active water value AW does not exceed 0.85.

2. Composition according to claim 1, characterized in that it contains no sweetening sugar.

3. Composition according to claim 1, characterized in that the proportions by weight of components (1) to (7) are as follows:

| | |
|---|---|
| (1) and (2) | 7-25% |
| (3) | 5-30% |
| (4) | 6-20% |
| (5) | 10-25% |
| (6) | 0.05-2.5% |
| (7) | 15-50% |

the balance to 100% consisting of indeterminate residual substances inherent to the ingredients used.

4. Composition according to claim 1, characterized in that the lactic proteins (1) are selected from that of powdered whole milk, powdered skim milk and lactoserum.

5. Composition according to claim 1, characterized in that the protein complements are selected from lactic proteins, animal proteins, vegetal proteins and microbial proteins.

6. Composition according to claim 5, characterized in that the animal proteins are selected from powdered dry meat, fish and crustacean proteins, the vegetal proteins are selected from soy flour, sunflower, cotton and peanut, and the microbial proteins are selected from mushroom, yeasts and bacteria.

7. Composition according to claim 1, characterized in that the starch is selected from corn starch, potato starch, wheat starch, rice starch and whole potato.

8. Composition according to claim 1, characterized in that the fatty substances are selected from animal fats, bacon, butter, lard and vegetable fats, margarine, coberine and cocoa butter.

9. Composition according to claim 1, characterized in that the hydrosoluble additives are selected from non sweetening or slightly sweetening carbohydrates, glycerine, ethylene glycol, sorbitol and maltodextrines.

10. Composition according to claim 1, characterized in that the other edible additives are selected from flavoring agents, vitamins, mineral salts, coloring agents, gelification and texturizing agents, antioxidants and antifungal compounds such as potassium sorbate.

11. A method for the preparation of the composition according to claim 1, characterized in that a part of the ingredients thereof are pulverized and mixed together, more particularly those with a high proportion of components (1), (2) and (6), with or without, all or in part, the ingredients rich in components (3) and (5), so as to obtain a solid pulverulent phase (A); the fatty substance (4) is homogeneously dispersed in all or part of the water (7) which contains, in the dispersed or dissolved state, the ingredients containing components (3) and (5) not yet incorporated to phase (A) so as to obtein a liquid phase (B); then phases (A) and (B) are intimately blended together under agitation with further addition, should it be the case, of the remaining water (7), the whole mass constituting the composition.

12. Method according to claim 11, characterized in that the ingredients substantially including components (1), (2), (3), (6) and the solid components of ingredients (5) are blended together in the dry state so as to obtain a powdery premixture (A1), the fatty substances (4) and the liquid components of ingredients (5) are emulsified hot into part of the available water (7) so as to provide a homogeneous liquid premixture (B1) and the warm emulsion (B1) and the remaining water are added progressively to premixture (A1) so as to form a fluid dispersion of solids in the liquid phase, the whole mass constituting the composition.

13. Method according to claim 11, characterized in that the ingredients substantially including components (1), (2), (3) and (6) are blended together in the dry state so as to obtain a powdery mixture (A2); ingredients (5) are dissolved in the water (7) and the fatty substances (4) are dispersed into this solution so as to provide a liquid dispersion (B2); then, the dispersion (B2) is slowly added under agitation to mixture (A2) until a homogeneous composition is obtained.

14. Method according to claim 11, characterized in that all available solid and liquid ingredients (1), (2) and (6), with the exception of the starch and a small proportion of the proteins, are blended together without the water and a phase (A3) is obtained; an aqueous puree is formed from the water (7), the starch (3) and said small proportion of proteins and the fatty substance is dispersed therein so as to provide an aqueous dispersion (B3); then said aqueous dispersion (B3) is added under agitation to mixture (A3) until a homogeneous composition is obtained.

15. The use of the composition according to claim 1 for making consistent and crunchy snackbars, characterized in that it is subjected to operations comprising (1) cooking and (2) shaping by casting or extrusion.

16. The use according to claim 15, characterized in that operation (2) precedes operation (1) when the composition contains from about 15 to 25% water, whereas this order is reversed when the water proportion exceeds about 25%.

17. The use according to claim 16, the composition containing more than 25% water, characterized in that the latter is heated for 15-30 min at 90-110°C under agitation, then for 2-4 hours at 60-80°C so that it thickens into a firm dough by gelification of the starch therein and evaporation of part of the water, then the dough is molded into bars, either hot or at room temperature, and the latter are allowed to stand and solidify into a crunchy solid mass.

18. The use according to claim 17, characterized in that the solidified bars are coated with a hot coating liquid, then the bars are embedded in a particulate edible coating mixture applied such that said particles stick to the bars due to the solidification by cooling of the coating liquid.

19. The use according to claim 18, characterized in that the coating liquid is a molten mixture of vegetal fats, carbohydrates, salt and edible flavors.

20. The use according to claim 18, characterized in that the embedding mixture comprises a selection of hazelnuts, almonds and other oilseeds in the ground or crushed state, roasted or puffed cereals and starches expanded in air or in oil.

21. The use according to claim 16, the composition containing less than 25% water approximately, characterized in that it is shaped by molding or extrusion, then the shaped forms are cooked for a few minutes in an oven heated to 150-200°C.

22. The use according to claim 21, characterized in that the internal temperature of the mass does not exceed 110°C during the cooking.

23. The use according to claim 21, characterized in that the bar is wrapped before cooking in a layer of cover dough made from flour, butter, water and salt.

24. The use according to claim 16, characterized in that the bars are co-extruded with a covering dough by means of a double spinning extruder, the bars being extruded by the central spinnerette thereof while the wrapping dow is extruded by the second spinnerette arranged concentrically to the first one, the whole being such that the bars are coated with a layer of the covering dough, the cooking operation being thereafter brought about the coated bars and causing the simultaneous hardening of the bars and the cover coating.